# DEMANDE DE BREVET EUROPEEN

(11) **EP 1 528 783 A1**
(43) Date de publication de la demande: **04.05.2005**
(21) Numéro de dépôt: 03447287.8
(22) Date de dépôt: 10.12.2003
(51) Int. Cl.: H04M 19/08

(54) **Dispositif et procédé d'alimentation d'énergie pour système de télécommunication par fils**

(30) Priorité: 03.11.2003 BE 200300589
(71) Demandeur: CE + T International, 9911 Troisvierges (LU)
(72) Inventeur: Bleus, Paul, 4020 Jupille (BE)
(74) Mandataire: Gevers, François

(57) **Abrégé**

L'invention concerne un dispositif d'alimentation d'énergie pour système de télécommunication par fils, comprenant : un convertisseur principal (1), agencé à être relié à une source d'énergie principale (8) et à fournir une tension principale pour alimenter une unité satellite (3) du système de télécommunication ; une source d'énergie auxiliaire (alimentation de secours) (2), reliée à l'unité satellite (3) et agencée à fournir une tension auxiliaire à l'unité satellite en cas de non conformité de la tension principale à au moins un critère prédéterminé. Suivant l'invention la source d'énergie auxiliaire comporte un module central (4) ayant une entrée agencée à être reliée à une source d'énergie disponible au central, et une sortie agencée à être reliée à au moins une paire de fils (TP) (5), ladite paire de fils étant relié à l'unité satellite.

## Description

La présente invention se rapporte à un dispositif d'alimentation d'énergie pour système de télécommunication par fils, comprenant un convertisseur principal, agencé à être relié à une source d'énergie principale et à fournir une tension principale pour alimenter une unité satellite du système de télécommunication; une source d'énergie auxiliaire (alimentation de secours), reliée à l'unité satellite et agencée à fournir une tension auxiliaire à l'unité satellite en cas de non conformité de la tension principale à au moins un critère prédéterminé.

Dans des systèmes connus, la source d'énergie auxiliaire est constituée d'éléments de stockage d'énergie, par exemples des batteries directement reliées à l'unité satellite. Ceci engendre des coûts d'investissement en infrastructure et coûts de maintenance élevés. En outre, ces systèmes locaux sont encombrants.

Un objet de la présente invention est de pallier à au moins un de ces inconvénients.

Suivant l'invention, le dispositif est caractérisé en ce que la source d'énergie auxiliaire comporte un module central ayant une entrée agencée à être reliée à une source d'énergie disponible au central, et une sortie agencée à être reliée à au moins une paire de fils (TP), ladite paire de fils étant relié à l'unité satellite.

Jusqu'à ce jour, des systèmes de télé-alimentation, comprenant le module central sont connus. De tels systèmes sont utilisés comme source d'énergie principale et présentent comme inconvénient majeur que le rendement global est bas et donc que les pertes d'énergie associées à son utilisation sont importantes. Par exemple, l'efficacité totale de tous les éléments mis en série peuvent être répartis sur la chaîne de conversion d'énergie de la manière suivante : 8 -15 % pour obtenir l'énergie 48V en amont du CPM (convertisseur central); 10 - 15 % dans le convertisseur central; 2 - 30 % dans la paire téléphonique (selon la longueur); 10 - 15 % dans le convertisseur final, soit une perte totale de 27 à 57 %.

Ceci implique :
1) l'utilisation d'un plus grand nombre de paires ;
2) la durée de vie réduite du système d'alimentation par les échauffements ;
3) la nécessité de prévoir de la redondance au niveau du module central, des paires de fils ainsi que des convertisseurs satellites.

En utilisant le système de télé-alimentation comme source d'énergie auxiliaire, on permet non seulement d'obtenir un rendement plus élevé, mais également à coût moins élevé que les systèmes d'alimentation locales (avec batteries) ou que les systèmes de télé-alimentation en source principales utilisés jusqu'à ce jour. En outre, par rapport aux systèmes de télé-alimentation en source principales, on peut réduire le nombre de paires, notamment en augmentant le courant maximum par paire, vu que les pertes ne sont engendrées que de manière occasionnelle lors de l'utilisation en mode secours. On peut également réduire le coût et simplifier la construction de la source d'énergie auxiliaire vu que le mode principal d'utilisation est le mode d'attente.

D'autres formes de réalisation du dispositif suivant l'invention sont décrites dans les revendications dépendantes. L'invention concerne également un procédé d'alimentation d'énergie pour système de télécommunication par fils,ainsi que l'utilisation du système de télé-alimentation en tant que source d'énergie auxiliaire.

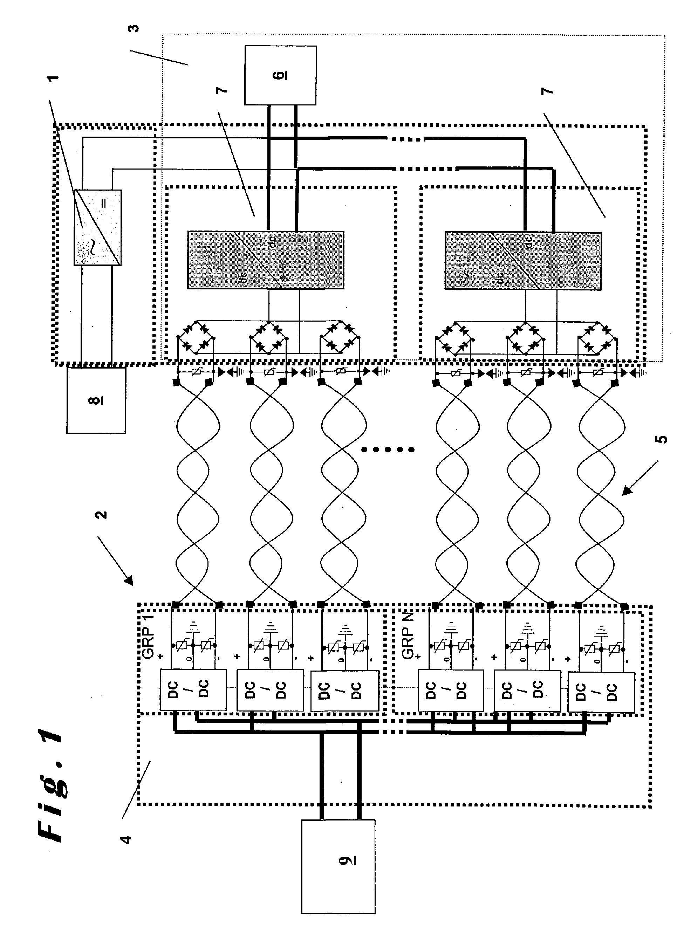

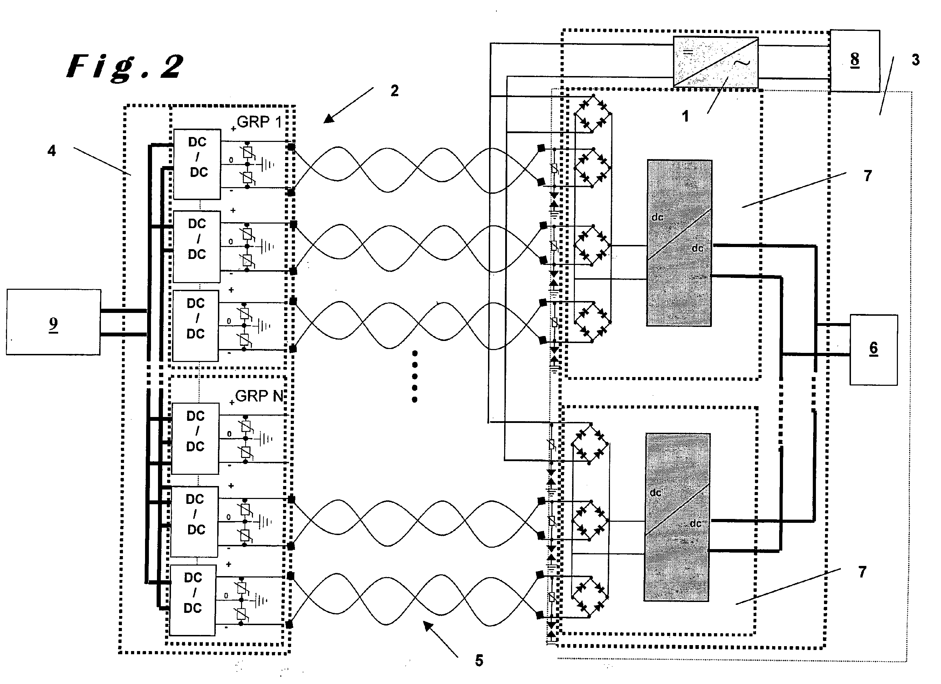

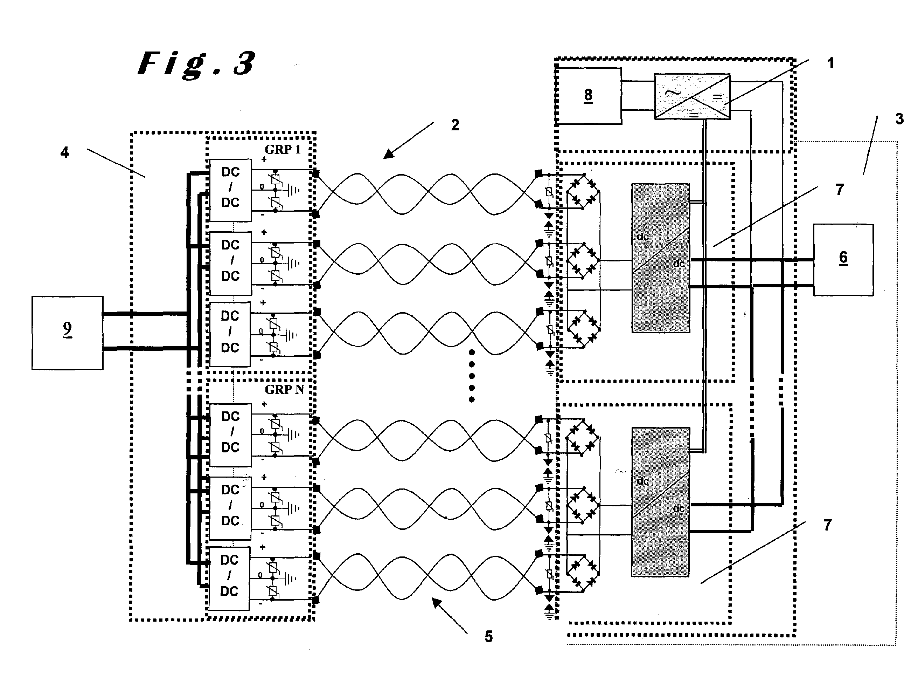

Des détails concernant l'invention sont décrits ci-après faisant référence aux dessins.
La figure 1 illustre un système comprenant une première forme de réalisation du dispositif suivant l'invention.
La figure 2 illustre un système comprenant une deuxième forme de réalisation du dispositif suivant l'invention.
La figure 3 illustre un système comprenant une deuxième forme de réalisation du dispositif suivant l'invention.
Dans les trois formes de réalisation suivant les figures 1 à 3, une source d'énergie disponible au central, par exemple une alimentation d'une tension déterminée (par exemple48 V DC) est reliée à des convertisseurs centraux du module central 4. La source d'énergie principale 8 est dans ce cas une source de courant alternatif. Toute autre source d'énergie, telle que cellules solaires, cellules à combustibles ou autres sources d'énergie à courant continu ou alternatif peut être utilisée. Le convertisseur principal 1 convertit l'énergie en une tension continue d'une valeur souhaitée, par exemple de l'ordre de 55 V. Cette tension est fournie soit directement à l'appareil ou charge 6 (figure 1), soit aux convertisseurs satellites (figure 2), soit à la charge 6 et aux convertisseurs satellites (figure 3). Les tensions sont de préférence isolées, afin d'augmenter la sécurité du système.

L'unité satellite 3 comprend les convertisseurs satellites 7, la charge 6, et le cas échéant, le convertisseur principal 1. Chaque convertisseur satellite peut, le cas échéant, être remplacé par plusieurs convertisseurs mis en parallèle.

Suivant l'invention, le module central 4 et la source d'énergie disponible au central 9 constituent la source d'énergie auxiliaire 2.

Dans la forme de réalisation suivant la figure 1, qui représente la forme la plus directe, il est important que latension en charge du convertisseur principale soit plus élevée que la tension à vide (par exemple 53 V) à la sortie des convertisseurs satellites 7, de sorte que l'énergie soit fournie à la charge 6 par le convertisseur principal 1 lors du fonctionnement normal. Il est à noter que ce principe de différence de tension est connu tel quel dans un système classique d'alimentation locale où la source d'énergie principale est une source AC et la source d'énergie auxiliaire est constituée d'une série de batteries.

Ainsi, le courant débité par la télé-alimentation, en conditions normales, est quasi nul. Si l'alimentation AC locale disparaît la télé-alimentation sert de secours et dispose d'une autonomie batterie (par exemple 48V) durant plusieurs heures. Dans ce cas, le critère prédéterminé indiquant la non conformité de la tension principale consiste en la non existence d'une tension. En général, la conformité du critère prédéterminé est de tomber dans une plage de tension de par exemple +/- 20% autour de la tension nominale. Le convertisseur principal 1 peut intégrer cette fonction de contrôle de conformité au critère prédéterminé. Suivant une forme alternative, le contrôle de conformité au critère prédéterminé consisterait en la vérification de la température du convertisseur principal dans une plage donnée.

De cette façon, on obtient pour l'alimentation un rendement de l'ordre de 90 % et plus, diminué de l'énergie minimum nécessaire pour la télé-alimentation en mode d'attente. L'alimentation locale et les convertisseurs satellite (RPB) peuvent être conçus de sorte qu'ils minimisent l'énergie consommée en mode d'attente. Le gain de rendement sera de l'ordre de 40% pour l'utilisation normale mais évidemment pas en mode secours.

Un autre avantage du système suivant l'invention est qu'il permet de simplifier le convertisseur principal et de réduire sa puissance nominale. En particulier, par rapport à un système d'alimentation locale classique comprenant des batteries comme source d'énergie auxiliaires, le convertisseur principal 1 doit être surdimensionné pour assurer la recharge éventuelle des batteries tout en alimentant la charge. Le convertisseur principal dans des systèmes classiques doit dans ce cas intégrer des fonctions de gestion des batteries, telle que le contrôle de l'autonomie, la compensation en température, l'égalisation ("boost mode") des sous-éléments de batteries, ... Dans le système suivant l'invention, les batteries au niveau local ne sont pas nécessaires, car l'alimentation auxiliaire est assuré par la télé-alimentation. Le convertisseur principal 1 suivant l'invention ne doit par conséquent pas être pourvu de ces fonctions de gestion des batteries.

Dans des systèmes d'alimentation en télécommunication connus (locale ou de télé-alimentation), on prévoit une redondance de type N + x, N étant le nombre d'unités de base d'alimentation nécessaires pour alimenter la charge et x étant des unité de secours en cas de défaut d'une des N unités de base. Par exemple, une télé-alimentation de redondance 3 + 1 comprend trois unités d'alimentation de base ainsi qu'une unité de secours.

Dans le dispositif suivant la figure 1, il ne faut plus prévoir de redondance au niveau de la télé-alimentation. Donc l'ajout d'une alimentation locale (convertisseur principal 1) est compensé par la suppression d'une chaîne complète comprenant comprenant un ou plusieurs convertisseurs centraux, la ou les paires de fils torsadés 5 reliées à ces convertisseurs centraux et le ou les convertisseurs satellites (7) reliés à ces paires de fils. Cette forme réduit donc la quantité de paires utilisées. Suivant l'exemple donné, on ne doit donc prévoir que trois chaînes complètes au lieu de quatre.

Une façon avantageuse de mettre en oeuvre le système est de concevoir le convertisseur principal dans la même forme et dimensions qu'un des convertisseur satellites. Ceci permet de transformer facilement un système connu de télé-alimentation classique en système suivant l'invention en remplaçant le convertisseur satellite redondant par le convertisseur principal. Dans ce cas, le convertisseur principal 1 fait partie de l'unité satellite 3. Dans l'exemple ci-dessus de l'alimentation redondante (3+1), il est en plus avantageux de prévoir la puissance de l'alimentation principale égale à trois fois la puissance d'un convertisseur satellite.

Une autre conséquence de l'utilisation de la télé-alimentation en tant que source auxiliaire est de permettre la mise en parallèle des sorties des convertisseurs centraux en limitant les inconvénients dus à l'augmentation du courant maximum des séries de convertisseurs centraux. Un exemple d'inconvénient de la mise en parallèle de convertisseurs centraux dans des système de télé-alimentation utilisée comme source principale est la dissipation excessive d'énergie dû au courant plus important dans la paire de fils. Dans le système suivant l'invention, la télé-alimentation est utilisée uniquement en mode secours, en d'autres termes à titre exceptionnel. Les dissipation d'énergie se présentent donc à titre exceptionnel. Ceci explique en partie le gain de rendement du système suivant l'invention.

La durée de vie de toute la chaîne est accrue (d'un facteur de quatre à cinq) du fait qu'en mode d'alimentation normal, la charge est alimentée par le convertisseur principal sans passer par la télé-alimentation de secours, et en particulier sans passer par les convertisseurs satellites. Les coûts de maintenance sont par conséquent fortement réduits.

Le convertisseur principal 1 comporte de préférence des moyens de test de l'alimentation de secours. A cet effet, on diminue la tension de sortie du convertisseur principal jusqu'à une valeur inférieure à celle de la tension de sortie en charge (par exemple 48 V) des convertisseurs satellites, pendant une période courte (de quelques secondes) et simultanément le convertisseur principal vérifie que son courant de sortie soit presque nul, ceci afin de vérifier le bon fonctionnement de la télé-alimentation. Ce test pourrait être programmé de manière automatique avec un cycle fixe de par exemple une (1) semaine pour une durée d'une (1) minute.

Une deuxième forme (figure 2) serait d'utiliser l'alimentation locale différemment, c'est-à-dire alimenter les convertisseurs satellites 7 en entrée, du côté des paires torsadées, avec une tension supérieure (par example +/- 180V ) à celle provenant des convertisseurs centraux (+/-160V), à travers un pont de diodes supplémentaire. Une forme très simple du convertisseur principal 1 serait d'utiliser un transformateur de tension 50/60 Hz ayant une tension secondaire crête à crête de 360 V AC. En pratique cet exemple de réalisation ne fonctionnerait qu'avec des réseaux électriques très stables.

Il faut noter que la sortie de cette alimentation AC/DC locale devrait respecter en sortie, les contraintes des circuit RFT donc une limitation en courant à maximum (RFT-C) ou en tension et puissance (RFT-V).

Cette solution est intéressante car l'énergie consommée par les convertisseurs satellite au repos est fournie par le convertisseur AC/DC local, mais cette deuxième forme nécessite le maintient de la redondance du RPB (satellite), du SOB (central) et des paires torsadées.

Une variante de ce dernier montage serait que l'alimentation locale aurait autant de sorties +/- 180V isolées que de télé-alimentations (RPB), de sorte que tous les RPB restent bien indépendants.

La figure 3 montre une forme selon la figure 1 améliorée au niveau du rendement par l'ajout d'une alimentation auxiliaire locale alimentant les circuits auxiliaires des RPB, principale source de consommation au repos. Elle présente l'avantage de ne pas devoir être conforme aux contraintes des circuits RFT en cas de défaut d'un pont de diode, mais devrait comporter une isolation (galvanique) entre la sortie du convertisseur principal et l'entrée du convertisseur satellite. Cette tension d'alimentation est basse (TBTS) par rapport à la forme selon la figure 2.

Pour les trois formes, il est à noter que l'appareil (charge) 6 à alimenter et indiqué dans les revendications fait en particulier référence à un appareil de type DSLAM (Digital Subscriber Line Access Multiplexer).

Le système de télé-alimentation peut être le cas échéant celui décrit dans la demande de brevet européen n° 03391001.9 dont le contenu est incorporé par référence, ainsi que celui décrit dans la demande de brevet européen n° 02077059.0.

### LEGENDES DES FIGURES

- 1: Convertisseur principal
- 2: Source d'énergie auxiliaire
- 3: Unité satellite
- 4: Module central
- 5: Paire de fils
- 6: Appareil/charge
- 7: Convertisseurs satellites
- 8: source d'énergie principale
- 9: source d'énergie disponible au central

## Revendications

1. Dispositif d'alimentation d'énergie pour système de télécommunication par fils, comprenant :
a) un convertisseur principal (1), agencé à être relié à une source d'énergie principale (8) et à fournir une tension principale pour alimenter une unité satellite (3) du système de télécommunication ;
b) une source d'énergie auxiliaire (alimentation de secours) (2), reliée à l'unité satellite (3) et agencée à fournir une tension auxiliaire à l'unité satellite en cas de non conformité de la tension principale à au moins un critère prédéterminé;
**caractérisé en ce que** la source d'énergie auxiliaire comporte un module central (4) ayant une entrée agencée à être reliée à une source d'énergie disponible au central, et une sortie agencée à être reliée à au moins une paire de fils (TP) (5), ladite paire de fils étant relié à l'unité satellite.

2. Dispositif suivant la revendication 1, dans lequel l'unité satellite comprend un appareil (une charge) (6, fig. 1) relié au convertisseur principal et au moins un convertisseur satellite (7, fig. 1), chaque convertisseur satellite étant relié d'une part à au moins une paire de fils et d'autre part à l'appareil.

3. Dispositif suivant la revendication 1, dans lequel l'unité satellite comprend :
a) au moins un convertisseur satellite (7, fig. 2), chaque convertisseur satellite étant relié d'une part à au moins une paire de fils et au convertisseur principal,
b) un appareil (une charge) (6, fig. 2) relié au(x) convertisseur(s) satellite(s).

4. Dispositif suivant la revendication 1, dans lequel le convertisseur principal comporte une première et une deuxième sortie et dans lequel l'unité satellite comprend :
a) au moins un convertisseur satellite (7, fig. 3), chaque convertisseur satellite étant relié d'une part à au moins une paire de fils et à la première sortie du convertisseur principal,
b) un appareil (une charge) (6, fig. 3) relié d'une part au(x) convertisseur(s) satellite(s) et d'autre part à la deuxième sortie du convertisseur principal.

5. Dispositif suivant l'une des revendications précédentes dans lequel au moins une des tensions est une tension isolée.

6. Utilisation d'un dispositif de transmission d'énergie électrique suivant l'une des revendications précédentes comme source d'énergie auxiliaire pour un système de télécommunication par fils.

7. Procédé d'alimentation d'énergie pour système de télécommunication par fils, **caractérisé en ce qu'**une alimentation auxiliaire est fournie à partir d'un module central agencé à être relié à une unité satellite par l'intermédiaire d'au moins une paire de fils.

8. Procédé mettant en oeuvre un dispositif suivant l'une des revendications 1 à 5.
